# EUROPEAN PATENT SPECIFICATION

(11) **EP 4 212 796 B1**
(45) Date of publication and mention of the grant of the patent: **29.01.2025**
(21) Application number: 22185164.5
(22) Date of filing: 15.07.2022
(51) Int. Cl.: F25B 21/02, F25D 11/02

(54) **REFRIGERATOR**
KÜHLSCHRANK
RÉFRIGÉRATEUR

(30) Priority: 13.01.2022 KR 20220005420
(43) Date of publication of application: 19.07.2023
(73) Proprietor: LG Electronics Inc., Seoul 07336 (KR)
(72) Inventor: PARK, Hyun Woo, 08592 Seoul (KR); LIM, Hyoung Keun, 08592 Seoul (KR); LEE, Jae Duck, 08592 Seoul (KR)
(74) Representative: Vossius & Partner Patentanwälte Rechtsanwälte mbB

(56) References cited:
- EP-A1- 3 385 641
- EP-A1- 3 663 686
- EP-A1- 3 933 314
- WO-A1-2019/165522
- CH-A2- 703 730
- JP-A- 2001 201 234
- KR-A- 20190 014 051
- US-A1- 2015 330 678

## Description

### BACKGROUND

### 1. Field

This disclosure relates to a refrigerator having an independent refrigerator that independently controls temperature and is used integrally or separately.

### 2. Description of the Related Art

A typical refrigerator is a home appliance for storing food at a low temperature, and may be divided into a refrigerator space and a freezer space according to the temperature of the food stored inside the refrigerator. In general, it is common to maintain the temperature of 3 to 4°C in a refrigerator space, and it is common to maintain the temperature of about -20°C in a freezer space.

However, the appropriate temperature range may vary depending on the type of food to be stored. For example, the appropriate temperature range for storage of alcoholic beverages such as wine is 4 to 18°C, for storage of kimchi, fruits and vegetables is 0 to 5°C, and in case of storage of meat and fish, the appropriate temperature range may be varied, such as -5°C.

In addition, various refrigerators are appearing according to various lifestyles and uses of modern people. For example, kimchi refrigerators, wine refrigerators, rice refrigerators, cosmetics refrigerators, and even tabletop refrigerators are appearing.

Meanwhile, a refrigerator having such various temperatures and uses may be implemented by allocating predetermined spaces inside the refrigerator.

For example, in the form of Korean Patent Registration No. 10-1146216, a method of implementing independent cooling by providing a plurality of evaporators under a single cooling cycle system and arranging the plurality of evaporators in a plurality of spaces is proposed. However, in the system, there is a risk of various problems such as controlling the circulation direction of the refrigerant and the generation of noise as the cooling cycle becomes complicated, and there is a disadvantage in that the cost of a device increases excessively.

In the above method, separately controlled spaces are fixed in a refrigerator. However, if a separately controlled space is separated and used as a separate refrigerator, its effectiveness may be further increased.

In addition, in the case of separately provided in the form of a separate small refrigerator in response to the various uses as described above, when its utilization is lowered, the inconvenience of occupying space may be caused.

JP 2001 201234 A relates to a refrigerating refrigerator which can easily obtain a freezing function by a small refrigerator using a thermoelectric element which can be stored in a large refrigerator. KR 2019 0014051 A relates to a refrigerator including a space, capable of quickly freezing food, separated from a refrigeration or freezing chamber.

### SUMMARY

An aspect provides a refrigerator that independently controls the temperature of a predetermined area inside the refrigerator.

An aspect provides a refrigerator in which a separated area may operate independently even when the independently controlled area is separated.

An aspect provides a refrigerator that has a structure that stably supplies power from a main body when an independently controlled area is coupled to the main body.

The invention is defined by independent claim 1. Further embodiments of the invention are defined by the dependent claims.

According to another aspect, the first heat pump module may include a compressor, a condenser, an expansion valve and an evaporator.

According to another aspect, the second heat pump module may be a thermoelectric element.

According to another aspect, the independent power supply part may be a battery.

According to another aspect, the independent power supply part may be electrically connected to the main body power supply part to receive power.

According to another aspect, the independent power supply part may be electrically connected to the main body power supply part through a power cable disposed on a side of the first cooling space of the main body.

According to another aspect, the power cable may be built in a cable box that is disposed in the main body but not to invade the first cooling space, and in response to a surface of the cable box being opened and closed toward the first cooling space, the cable box may communicate with the first cooling space.

According to another aspect, the cable box may include a first area in which a power cable terminal enters and exits configured to directly communicate with the first cooling space in response to the surface of the cable box being opened and closed, and a second area in which the power cable enters and exits configured not to communicate with the first cooling space.

According to another aspect, the power cable may be an automatic reel type, the power cable wound and built in the second area may be drawn out in response to a withdrawal of the power cable terminal, and a length exposed to the first cooling space may change.

According to another aspect, the power cable may be electrically connected to the main body power supply part, and the power cable terminal may be connected to the independent power supply part of the independent refrigerator to electrically connect the main body power supply part and the independent power supply part.

According to another aspect, the cable box may further include a cable box door that moves between the first area and the second area and closes or opens the first area with respect to the first cooling space. According to another aspect, the control panel may be powered by an articulated cable that has one side connected to the control panel and the other side connected to the independent power supply part, and as a multi-joint type, the articulated cable may be freely deformable while maintaining a predetermined curvature within a preset direction and a preset angle range in response on a withdrawal of the storage compartment.

According to another aspect, the first cooling space may include a refrigerator space and a freezer space.

According to another aspect, the independent refrigerator may be disposed in the refrigerator space.

According to another aspect, the independent refrigerator may be disposed in the freezer space.

According to another aspect, the storage compartment may include a swing bar that is disposed in a width direction of the storage compartment and rotates around a virtual axis parallel to the width direction of the storage compartment.

According to another aspect, the swing bar may include a beverage holder with semicircular repeating grooves.

According to another aspect, the swing bar may be installed at a predetermined distance from the sliding door.

According to example embodiments, the independent refrigerator may operate independently in a temperature range different from the internal temperature of the refrigerator.

According to example embodiments, when the independent refrigerator is disposed inside the refrigerator, the independent refrigerator may be electrically connected to the main body of the refrigerator to share power.

According to example embodiments, the independent refrigerator may operate as an independent individual refrigerator even if the independent refrigerator is separated from the refrigerator.

According to example embodiments, inside of the independent refrigerator may be used for various purposes through the swing bar installed in the independent refrigerator.

### BRIEF DESCRIPTION OF THE DRAWINGS

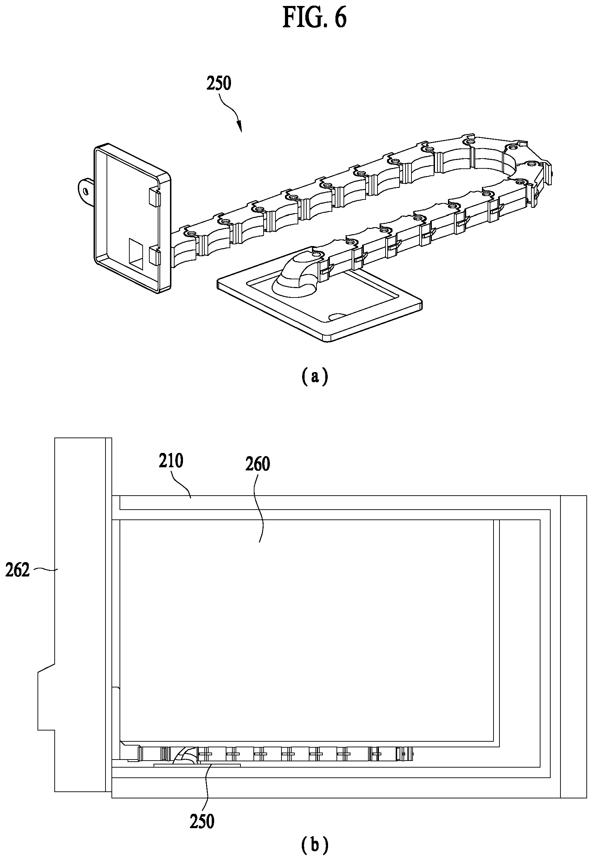

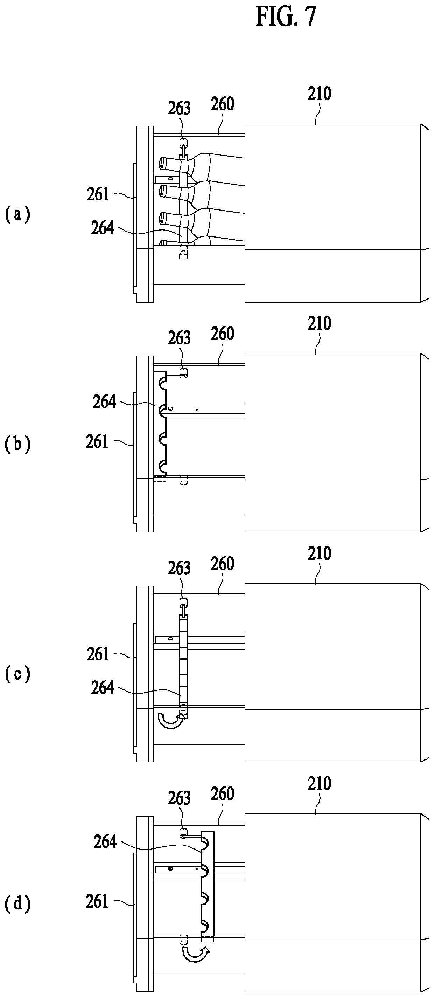

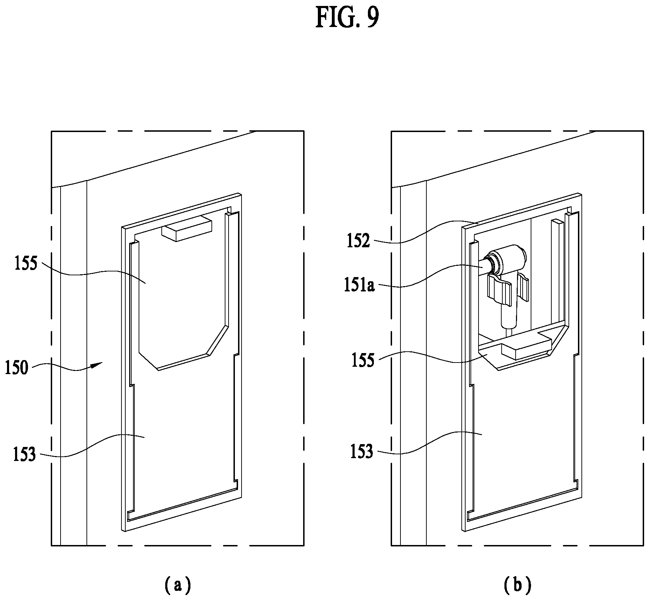

The above and other aspects, features, and advantages of certain embodiments will be more apparent from the following detailed description taken in conjunction with the accompanying drawings, in which:
FIG. 1 is view illustrating a state in which a door of a refrigerator according to an example embodiment of the present disclosure is opened;
FIG. 2 is a view illustrating an internal structure of a first cooling space after a door of a refrigerator according to an example embodiment of the present disclosure is removed;
FIG. 3 is a view exemplarily illustrating a form in which an independent refrigerator according to an example embodiment of the present disclosure is installed in a refrigerator;
FIG. 4 is a view illustrating a state in which an independent refrigerator according an example embodiment of the present disclosure is separated;
FIG. 5 is an exploded perspective view of an independent refrigerator according an example embodiment of the present disclosure;
(a) of FIG. 6 is a view illustrating an articulated cable for supplying power to a control panel of an independent refrigerator according an example embodiment of the present disclosure, and (b) of FIG. 6 is a cross-sectional view illustrating a state in which the articulated cable is installed in the independent refrigerator;
(a) of FIG. 7 to (d) of FIG. 7 are views illustrating various examples of utilization of an independent refrigerator according an example embodiment of the present disclosure;

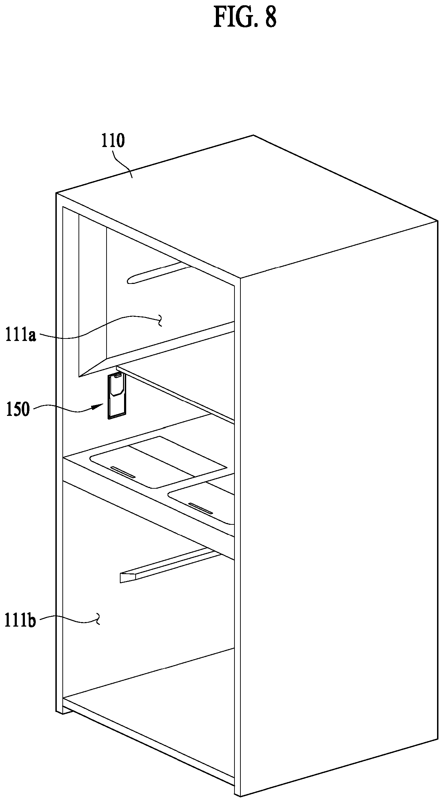

FIG. 8 is a view illustrating a location where a cable box is located in a refrigerator according an example embodiment of the present disclosure;
(a) of FIG. 9 is a view illustrating a closed state of a cable box door of a cable box according an example embodiment of the present disclosure, and (b) of FIG. 9 is a view illustrating an open state of the cable box door of the cable box according an example embodiment of the present disclosure;

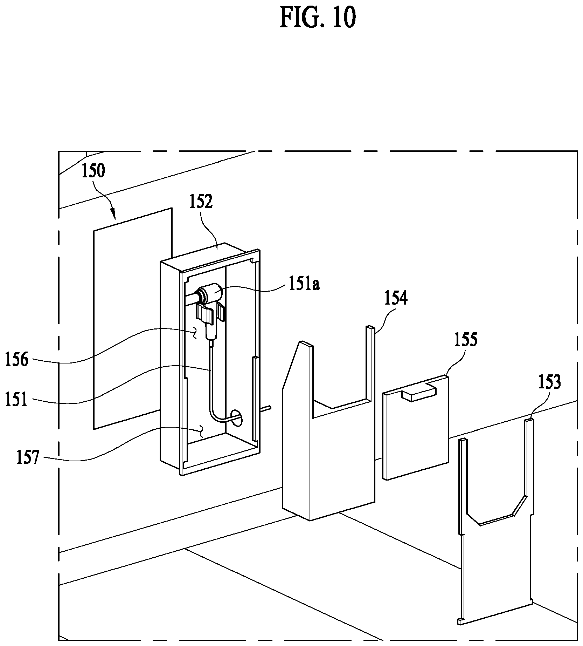

FIG. 10 is an exploded perspective view of a cable box according an example embodiment of the present disclosure; and

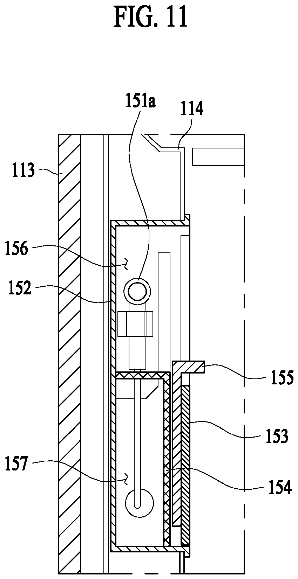

FIG. 11 is a cross-sectional view of a cable box according an example embodiment of the present disclosure.

### DETAILED DESCRIPTION

Hereinafter, exemplary embodiments disclosed in the present specification will be described in detail with reference to the accompanying drawings, but identical or similar elements are denoted by the same reference numerals regardless of drawing numbers, and redundant descriptions thereof will be omitted. The suffixes "module" and "unit" for components used in the following description are given or used interchangeably in consideration of only the ease of preparation of the specification, and do not have meanings or roles that are distinguished from each other. In addition, in describing the embodiments disclosed in the present specification, when it is determined that a detailed description of related known technologies may obscure the gist of the embodiments disclosed in the present specification, the detailed description thereof will be omitted. In addition, the accompanying drawings are for easy understanding of the embodiments disclosed in the present specification, but the technical idea disclosed in the present specification is not limited by the accompanying drawings, and it should be understood to include all modifications, equivalents, or substitutes included in the scope of the present disclosure.

Terms including an ordinal number such as first and second may be used to describe various elements, but the elements are not limited by the terms. These terms are used only for the purpose of distinguishing one component from another component.

When a component is referred to as being "coupled" or "connected" to another component, it should be understood that it may be directly coupled or connected to the other component, but other components may exist in the middle. On the other hand, when a component is referred to as being "directly coupled" or "directly connected" to another component, it should be understood that there is no other component in the middle.

Singular expressions include plural expressions unless the context clearly indicates otherwise.

In the present application, terms such as "comprise" or "have" are intended to designate the presence of features, numbers, steps, actions, components, parts, or combinations thereof described in the specification, but it is to be understood that it does not preclude in advance the possibility of the presence or addition of one or more other features, numbers, steps, actions, components, parts, or combinations thereof.

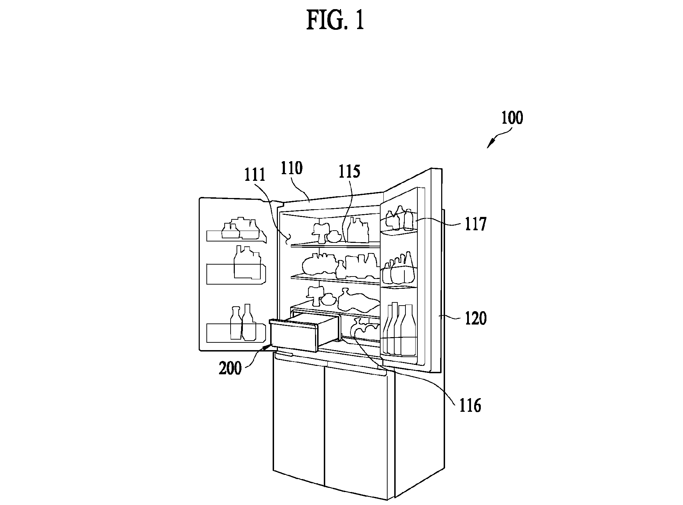

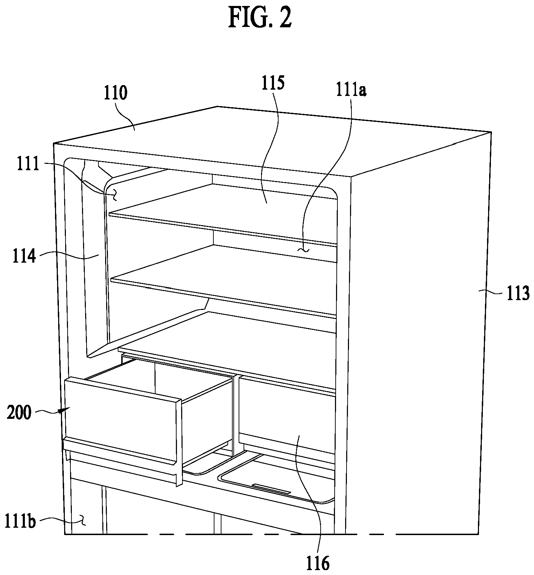

FIG. 1 is view illustrating a state in which a door 120 of a refrigerator 100 according to an example embodiment of the present disclosure is opened, and FIG. 2 is a view illustrating an internal structure of a first cooling space 111 after the door 120 of the refrigerator 100 according to an example embodiment of the present disclosure is removed.

Referring to FIGS. 1 and 2, the refrigerator 100 according to an example embodiment of the present disclosure may include a main body 110 having a rectangular parallelepiped shape of the refrigerator 100, and the door 120 of the refrigerator 100 that selectively opens and closes the first cooling space 111 of the main body 110 of the front of the main body 110. The first cooling space 111 according to an example embodiment of the present disclosure may include a refrigerator space 111a and a freezer space 111b. The refrigerator 100 according to an example embodiment of the present disclosure has a bottom freezer structure in which the refrigerator space 111a is provided at an upper portion and the freezer space 111b is provided at a lower portion. The refrigerator space 111a and the freezer space 111b may each include the door 120 that is a double-door-type, which rotates and opens based on hinges of both ends. However, the present disclosure is not limited to the refrigerator 100 having the bottom freezer structure, and if the refrigerator 100 has a structure wherein an independent refrigerator 200 is installed in the refrigerator space 111a or the freezer space 111b, it may be the refrigerator 100 having a side-by-side structure in which the refrigerator space 111a and the freezer space 111b are respectively disposed on the left and right, or may be the refrigerator 100 having a top mount structure in which the freezer space 111b is disposed above the refrigerator space 111a.

The main body 110 of the refrigerator 100 according to an example embodiment may include an outer case 113 constituting the exterior and an inner case 114 that is installed to be spaced apart from the outer case 113 by a predetermined distance and forms the refrigerator space 111a and the freezer space 111b. The space between the outer case 113 and the inner case 114 is filled with a heat insulating material to thermally separate the refrigerator space 111a and the freezer space 111b from the external space of the refrigerator 100.

A shelf 115 and a drawer 116 may be disposed in the refrigerator space 111a and the freezer space 111b according to an example embodiment to increase space utilization efficiency, and the shelf 115 and the drawer 116 may be disposed to be guided along rails disposed on the left and right. A door basket 117 may be installed inside on the door 120 of the refrigerator space 111a and the door 120 of the freezer space 111b as shown, so that the door basket 117 may be formed to be suitable for storing containers such as beverage bottles.

A machine room isolated from the freezer space 111b is located at a rear lower portion of the freezer space 111b according to an example embodiment, and a first heat pump module (not shown) may be disposed in the machine room to operate the refrigerator 100 according to an example embodiment. The first heat pump module may refer to a refrigeration cooling cycle device using a refrigerant, and may include a compressor, a condenser, an expansion valve and an evaporator.

The first heat pump module according to an example embodiment is powered by a main body power supply part (not illustrated) connected to the main body 110. The main body power supply part may be power supplied to a home through a power plug (for example, 100 to 220V power), and in addition to supplying power to the entire operation of the refrigerator 100, power may also be supplied to the independent refrigerator 200, which will be described later.

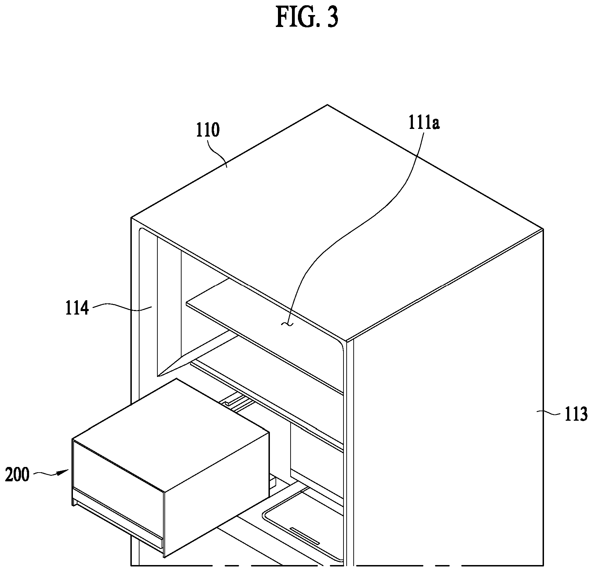

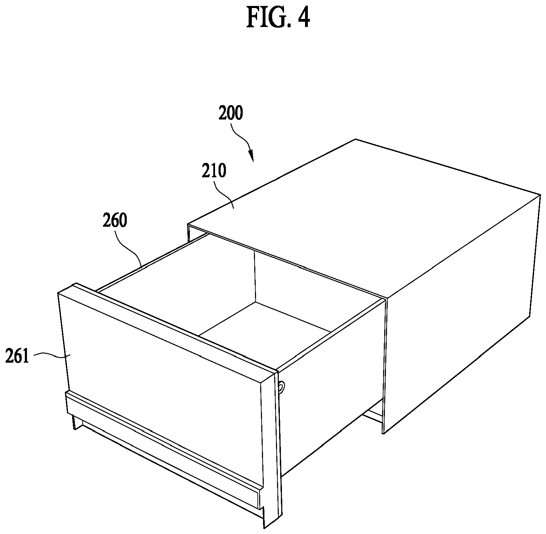

FIG. 3 is a view exemplarily illustrating a form in which the independent refrigerator 200 according to an example embodiment of the present disclosure is installed in the refrigerator 100, and FIG. 4 is a view illustrating a state in which the independent refrigerator 200 according an example embodiment of the present disclosure is separated.

The independent refrigerator 200 according to an example embodiment may be disposed in the freezer space 111b and used together as described above, but in order to facilitate understanding of the present disclosure, a case where the independent refrigerator 200 is disposed and used in the refrigerator space 111a will be mainly described.

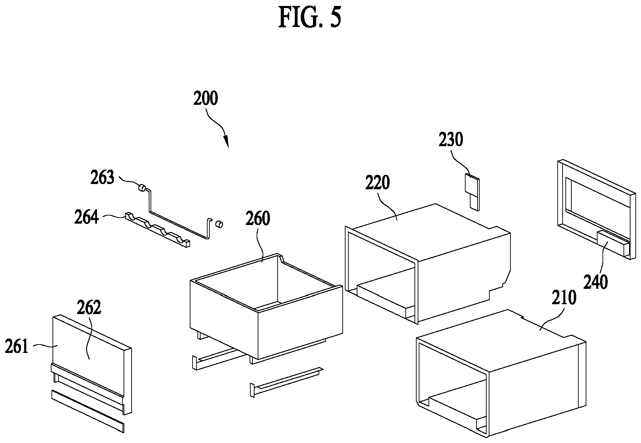

The independent refrigerator 200 according to an example embodiment of the present disclosure may be installed in the refrigerator space 111a of the refrigerator 100 and used together, or may be separated and used as a separate independent small refrigerator. The independent refrigerator 200 may be formed as an insulated space independent of the refrigerator space 111a. The independent refrigerator 200 may include a second heat pump module 230 (see FIG. 5) and an independent power supply part 240 (see FIG. 5). Through this, when the independent refrigerator 200 is mounted and used in the refrigerator space 111a, the independent refrigerator 200 may operate at a temperature in a range different from the temperature of the refrigerator space 111a, and when separated from the refrigerator 100, the independent refrigerator 200 may operate as a fully independent small refrigerator.

The independent power supply part 240 of the independent refrigerator 200 according to an example embodiment may be of a power supply method using a power plug, or the independent power supply part 240 may be a built-in battery. Like the first heap pump module, the second heat pump module 230 may refer to a refrigeration cooling cycle device using a refrigerant, or may refer to a cooling device using a thermoelectric element. Further, in describing the refrigerator 100 according to an example embodiment of the present disclosure, for better understanding, a case where the independent power supply part 240 is a battery and the second heat pump module 230 is a thermoelectric element will be described as an example embodiment.

In the independent refrigerator 200 according to an example embodiment, the independent refrigerator 200 itself may be detachably attached to a portion of the refrigerator space 111a in a sliding form. However, it is not necessarily limited to a method of detaching by a sliding method, and a method for a user to conveniently separate the independent refrigerator 200 from and couple to the refrigerator 100 may be applied without limitation. When the independent refrigerator 200 is mounted in the refrigerator space 111a, power of the independent refrigerator 200 may be electrically connected to the main body power supply part to operate the independent refrigerator 200.

FIG. 5 is an exploded perspective view of the independent refrigerator 200 according an example embodiment of the present disclosure.

The independent refrigerator 200 according to an example embodiment may include an outer housing 210, an inner housing 220 and a storage compartment 260. The outer housing 210 and the inner housing 220 according to the example embodiment may be spaced apart from each other by a predetermined distance to form a space. The space formed by the outer housing 210 and the inner housing 220 being spaced apart may be filled with an insulating material to thermally separate a second cooling space of the inner housing 220 from the refrigerator space 111a.

The outer housing 210 according to an example embodiment may form an external shape when the independent refrigerator 200 is separated from the refrigerator 100. In the second cooling space of the inner housing 220 according to an example embodiment, the storage compartment 260 may be disposed to enter and exit. The storage compartment 260 may be a sliding type that opens and closes.

The independent refrigerator 200 according to the invention further include a sliding door 261 and a control panel 262. The sliding door 261 is disposed on one surface of the storage compartment 260 and seal the second cooling space together with the inner housing 220. The control panel 262 is disposed on the sliding door 261, and the independent refrigerator 200 is controlled and the state of the independent refrigerator 200 may be identified through the control panel 262.

The control panel 262 according to an example embodiment may be in the form of a touch display panel. An operation mode of the independent refrigerator 200 may be set through the control panel 262. For example, the independent refrigerator 200 may be set to be in a beverage storage mode for mainly storing alcoholic beverages or beverages, a vegetable storage mode for storing kimchi, fruits or vegetables, or a meat/fish storage mode for storing meat or fish. The beverage storage mode may be set to operate the independent refrigerator 200 in the temperature range of about 4 to 8°C, the vegetable storage mode may be set to operate in the temperature range of about 0 to 5°C, and the meat/fish storage mode may be set to operate at -5°C. The above temperature ranges are exemplary and the present disclosure is not limited to the numerical ranges, and the example embodiments are meaningful that a user may easily set the temperature of the independent refrigerator 200 to operate within a preset temperature range by selecting an operation mode. In addition, the independent refrigerator 200 may be set to be at a fixed temperature that is a specific temperature arbitrarily set by a user through operation on the control panel 262, or the independent refrigerator 200 may be set to operate in an airtight storage mode so that odors inside the independent refrigerator 200 do not leak. For example, for the meat/fish storage mode, the airtight storage mode may be activated simultaneously to prevent leakage of odors. In addition, the control panel 262 may display and control various information related to the independent refrigerator 200, such as a battery charge state and the remaining amount of the battery.

The second heat pump module 230 and the independent power supply part 240 may be disposed in a space between the outer housing 210 and the inner housing 220 according to an example embodiment. As described above, the second heat pump module 230 may refer to a refrigeration cooling cycle device using a refrigerant like the first heat pump module, or may refer to a cooling device using a thermoelectric element. Meanwhile, in the refrigerator 100 according to an example embodiment of the present disclosure, a battery may be used as the independent power supply part 240, and a thermoelectric element may be used as the second heat pump module 230.

(a) of FIG. 6 is a view illustrating an articulated cable for supplying power to a control panel of an independent refrigerator according an example embodiment of the present disclosure, and (b) of FIG. 6 is a cross-sectional view illustrating a state in which the articulated cable is installed in the independent refrigerator 200.

Since the independent refrigerator 200 according to an example embodiment may be controlled by the control panel 262 formed on a surface of the storage compartment 260, and the control panel 262 displays various information of the independent refrigerator 200, power supply may be required. However, since the distance between the control panel 262 receiving power and the power supply point changes as the storage compartment 260 moves in a sliding type, a fixed power supply line may be easily disconnected. Accordingly, the control panel 262 of the independent refrigerator 200 according to an example embodiment of the present disclosure may receive power through an articulated cable 250.

The articulated cable 250 according to an example embodiment has one end connected to the control panel 262 and the other end connected to the independent power supply part 240. As a multi-joint shape, the articulated cable 250 may be deformed while maintaining a predetermined curvature within the preset direction and a preset angle range according to the entry and exit of the storage compartment 260. Since the articulated cable 250 is deformed while maintaining the predetermined curvature within the preset direction and the preset angle range, a power cable connected to the control panel 262 may be prevented from being deformed beyond the elastic limit, and disconnection may be prevented.

(a) of FIG. 7 to (d) of FIG. 7 are views illustrating various examples of utilization of the independent refrigerator 200 according an example embodiment of the present disclosure.

A swing bar 263 may be disposed inside the independent refrigerator 200 according to an example embodiment of the present disclosure. The swing bar 263 according to the example embodiment of the present disclosure may be disposed to cross the storage compartment 260 in the width direction, and may be rotatable with respect to an arbitrary axis formed in parallel with the width direction of the storage compartment 260, and the swing bar 263 may be disposed to be spaced from the sliding door 261 by a predetermined distance.

The swing bar 263 according to an example embodiment may have a beverage holder 264 formed with semicircular grooves in a shape to easily mount a wine bottle as shown in (a) of FIG. 7. As shown in (b) of FIG. 7, when the swing bar 263 rotates toward the sliding door 261, the swing bar 263 may be disposed but not to interfere with the utilization of the entire space of the storage compartment 260. When the swing bar 263 is disposed as shown in (c) and (d) of FIG. 7, the swing bar 263 may be utilized for the purpose of dividing the space of the storage compartment 260 according to the arrangement shape.

FIG. 8 is a view illustrating a location where a cable box 150 is located in the refrigerator 100 according an example embodiment of the present disclosure, (a) of FIG. 9 is a view illustrating a closed state of a cable box door of a cable box according an example embodiment of the present disclosure, and (b) of FIG. 9 is a view illustrating an open state of the cable box door of the cable box according an example embodiment of the present disclosure.

Referring to FIG. 8 to (b) of FIG. 9, the cable box 150 according to an example embodiment of the present disclosure may be formed to communicate with the first cooling space 111 of the main body 110. As described above, as the first cooling space 111 of the present disclosure may include the refrigerator space 111a and the freezer space 111b, the cable box 150 according to an example embodiment may be formed in the refrigerator space 111a or the freezer space 111b. Further, in order to facilitate understanding of the present disclosure, a case in which the cable box 150 is also formed in the refrigerator space 111a will be described as an example embodiment, based on the case in which the independent refrigerator 200 is disposed in the refrigerator space 111a.

The cable box 150 according to an example embodiment of the present disclosure may be disposed on the main body 110 but not to invade the first cooling space 111. The cable box 150 according to an example embodiment may be disposed in the space between the outer case 113 and the inner case 114 of the main body 110 of the refrigerator, and may be formed so that one surface opens and closes toward the first cooling space 111, and thus the cable box 150 may communicate with the first cooling space 111.

The cable box 150 according to an example embodiment of the present disclosure may include a first area 156 (see FIG. 10) and a second area 157 (see FIG. 10). The first area 156 of the cable box 150 according to an example embodiment may directly communicate with the refrigerator space 111a of the refrigerator 100 and may be opened and closed by a cable box door 155. A power cable terminal 151a may be disposed in the first area 156, and when the cable box door 155 is opened, the power cable terminal 151a may be exposed to be connected to the independent power supply part 240. In the second area 157 according to an example embodiment, a cable of a power cable 151 may be stored, and the second area 157 may not directly communicate with the refrigerator space 111a of the refrigerator 100. The power cable 151 may be an automatic reel type and the wound power cable 151 may be built in the second area 157. As the power cable terminal 151a is withdrawn, the power cable 151 wound in the second area 157 may be drawn out and the length of the power cable 151 exposed to the refrigerator space 111a may be adjusted.

FIG. 10 is an exploded perspective view of the cable box 150 according an example embodiment of the present disclosure, and FIG. 11 is a cross-sectional view of the cable box 150 according an example embodiment of the present disclosure.

The cable box 150 according to the example embodiment of the present disclosure may include a cable outer housing 152, a separation bracket 154, the cable box door 155 and a cable inner housing 153.

Referring to FIGS. 10 and 11, the cable outer housing 152 according to an example embodiment may be formed in a rectangular parallelepiped shape with one surface open. In order to help the understanding of the present disclosure, a rectangular parallelepiped shape is described, but the present disclosure is not limited thereto and a structure that may form a space inside may be applied without limitation.

The cable outer housing 152 according to an example embodiment may pass through a portion of the inner case 114 of the main body 110 to be disposed in a space between the outer case 113 and the inner case 114, and an open surface of the cable outer housing 152 may be aligned with a hole formed in the inner case 114.

The separation bracket 154 according to an example embodiment may form the first area 156 and the second area 157 of the cable box 150 by the separation bracket 154 being inserted into the cable outer housing 152 to divide the space of the cable outer housing 152. The separation bracket 154 closes the second area 157 with respect to the refrigerator space 111a to prevent foreign substances from entering from the refrigerator space 111a, and thus breakdown or a malfunction of the refrigerator 100 may be prevented.

The cable inner housing 153 according to an example embodiment may be coupled to the open surface of the cable outer housing 152, but the first area 156 of the cable box 150 may be opened and the second area 157 may be closed. The cable inner housing 153 may be aligned with the surface of the inner case 114 of the main body 110.

The cable box door 155 according to an example embodiment may be disposed between the cable outer housing 152 and the cable inner housing 153, and may reciprocate while sliding in the first area 156 and the second area 157 of the cable box 150. More specifically, when the cable box door 155 is located in the first area 156, the cable box 150 may be closed and separated from the refrigerator space 111a, and when the cable box door 155 is positioned in the second area 157, the first area 156 of the cable box 150 may communicate with the refrigerator space 111a.

The power cable 151 of the cable box 150 according to an example embodiment is drawn out so that the power cable terminal 151a may be electrically connected to the independent power supply part 240 of the independent refrigerator 200 to receive power from the main body power supply part. While the independent power supply part 240 according to an example embodiment is connected to the main body power supply part, the independent refrigerator 200 may be operated with the power supplied from the main body power supply part, and the independent power supply part 240 (for example, a battery) may be charged.

It will be apparent to those skilled in the art that various modifications and variations can be made in the present disclosure without departing from the scope of the disclosure.

## Claims

1. A refrigerator comprising:
a main body (110) comprising a first cooling space (111);
a door (120) that selectively seals the first cooling space (111) of the main body (110);
a first heat pump module built in the main body (110) and configured to cool the first cooling space (111);
an independent refrigerator (200) that is detachably disposed in the first cooling space (111) sealed by the door (120) and forms an insulating space independent of the first cooling space (111);
a second heat pump module (230) built in the independent refrigerator (200) to cool a second cooling space of the independent refrigerator (200);
a main body power supply part that is built in the main body (110) and supplies power; and
an independent power supply part (240) built in the independent refrigerator (200),
wherein the independent refrigerator (200) comprises:
an outer housing (210) forming an external shape of the independent refrigerator (200);
an inner housing (220) forming the second cooling space of the independent refrigerator (200); and
a storage compartment (260) that enters and exits the inner housing (220), and
wherein the second heat pump module (230) is disposed in a space between the outer housing (210) and the inner housing (220),
**characterized in that**
the independent refrigerator (200) further comprises a sliding door (261) that is disposed on a surface of the storage compartment (260) and seals the second cooling space together with the inner housing (220),
wherein the sliding door (261) comprises a control panel (262) configured to control the independent refrigerator (200) and display information of the independent refrigerator (200).

2. The refrigerator of claim 1, wherein the second heat pump module (230) is a thermoelectric element.

3. The refrigerator of claim 1 or 2, wherein the independent power supply part (240) is a battery.

4. The refrigerator of claim 1, 2 or 3, wherein the independent power supply part (240) is electrically connected to the main body power supply part to receive power.

5. The refrigerator of claim 4, wherein the independent power supply part (240) is electrically connected to the main body power supply part through a power cable (151) disposed on a side of the first cooling space (111) of the main body (110).

6. The refrigerator of claim 5, wherein the power cable (151) is built in a cable box (150) that is disposed in the main body (110) but not to invade the first cooling space (111), and in response to a surface of the cable box (150) being opened and closed toward the first cooling space (111), the cable box (150) communicates with the first cooling space (111).

7. The refrigerator of claim 6, wherein the cable box (150) comprises:
a first area (156) in which a power cable terminal (151a) enters and exits configured to directly communicate with the first cooling space (111) in response to the surface of the cable box (150) being opened and closed; and
a second area (157) in which the power cable (151) enters and exits configured not to communicate with the first cooling space (111).

8. The refrigerator of claim 7, wherein the power cable is an automatic reel type, the power cable (151) wound and built in the second area (157) is drawn out in response to a withdrawal of the power cable terminal (151a), and a length exposed to the first cooling space (111) changes.

9. The refrigerator of claim 8, wherein the power cable (151) is electrically connected to the main body power supply part, and the power cable terminal (151a) is connected to the independent power supply part (240) of the independent refrigerator (200) to electrically connect the main body power supply part and the independent power supply part (240).

10. The refrigerator of any one of claims 7 to 9, wherein the cable box (150) further comprises a cable box door (155) that moves between the first area (156) and the second area (157) and closes or opens the first area (156) with respect to the first cooling space (111).

11. The refrigerator of any one of claims 1 to 10, wherein the storage compartment (260) comprises a swing bar (263) that is disposed in a width direction of the storage compartment (260) and rotates around a virtual axis parallel to the width direction of the storage compartment (260).

12. The refrigerator of claim 11, wherein the swing bar (263) comprises a beverage holder with semicircular repeating grooves.

13. The refrigerator of claim 11 or 12, wherein the swing bar (263) is installed at a predetermined distance from the sliding door (261).

## Patentansprüche

1. Kühlschrank, der aufweist:
einen Hauptkörper (110), der einen ersten Kühlraum (111) aufweist;
eine Tür (120), die den ersten Kühlraum (111) des Hauptkörpers (110) selektiv abdichtet;
ein erstes Wärmepumpenmodul, das in den Hauptkörper (110) eingebaut und konfiguriert ist, den ersten Kühlraum (111) zu kühlen;
einen unabhängigen Kühlschrank (200), der abnehmbar in dem ersten Kühlraum (111) angeordnet ist, der durch die Tür (120) abgedichtet ist, und einen Isolierraum bildet, der unabhängig von dem ersten Kühlraum (111) ist;
ein zweites Wärmepumpenmodul (230), das in dem unabhängigen Kühlschrank (200) eingebaut ist, um einen zweiten Kühlraum des unabhängigen Kühlschranks (200) zu kühlen;
einen Hauptkörper-Stromversorgungsteil, der in dem Hauptkörper (110) eingebaut ist und Strom liefert; und
einen unabhängigen Stromversorgungsteil (240), der in dem unabhängigen Kühlschrank (200) eingebaut ist,
wobei der unabhängige Kühlschrank (200) aufweist:
ein Außengehäuse (210), das eine äußere Form des unabhängigen Kühlschranks (200) bildet;
ein Innengehäuse (220), das den zweiten Kühlraum des unabhängigen Kühlschranks (200) bildet; und
ein Aufbewahrungsfach (260), das in das Innengehäuse (220) eintritt und aus diesem austritt, und
wobei das zweite Wärmepumpenmodul (230) in einem Raum zwischen dem Außengehäuse (210) und dem Innengehäuse (220) angeordnet ist,
**dadurch gekennzeichnet, dass**
der unabhängige Kühlschrank (200) ferner eine Schiebetür (261) aufweist, die an einer Oberfläche des Aufbewahrungsfachs (260) angeordnet ist und den zweiten Kühlraum zusammen mit dem Innengehäuse (220) abdichtet,
wobei die Schiebetür (261) ein Bedienfeld (262) aufweist, das konfiguriert ist, den unabhängigen Kühlschrank (200) zu steuern und Informationen des unabhängigen Kühlschranks (200) anzuzeigen.

2. Kühlschrank nach Anspruch 1, wobei das zweite Wärmepumpenmodul (230) ein thermoelektrisches Element ist.

3. Kühlschrank nach Anspruch 1 oder 2, wobei der unabhängige Stromversorgungsteil (240) eine Batterie ist.

4. Kühlschrank nach Anspruch 1, 2 oder 3, wobei der unabhängige Stromversorgungsteil (240) elektrisch mit dem Hauptkörper-Stromversorgungsteil verbunden ist, um Strom zu empfangen.

5. Kühlschrank nach Anspruch 4, wobei der unabhängige Stromversorgungsteil (240) mit dem Stromversorgungsteil des Hauptkörpers über ein Stromkabel (151) elektrisch verbunden ist, das an einer Seite des ersten Kühlraums (111) des Hauptkörpers (110) angeordnet ist.

6. Kühlschrank nach Anspruch 5, wobei das Stromkabel (151) in einem Kabelkasten (150) eingebaut ist, der im Hauptkörper (110) angeordnet ist, aber nicht in den ersten Kühlraum (111) eindringt, und als Reaktion darauf, dass eine Oberfläche des Kabelkastens (150) zum ersten Kühlraum (111) geöffnet und geschlossen wird, der Kabelkasten (150) mit dem ersten Kühlraum (111) in Verbindung steht.

7. Kühlschrank nach Anspruch 6, wobei der Kabelkasten (150) aufweist:
einen ersten Bereich (156), in den ein Stromkabelanschluss (151a) eintritt und aus dem er austritt, der konfiguriert ist, als Reaktion darauf, dass die Oberfläche des Kabelkastens (150) geöffnet und geschlossen wird, direkt mit dem ersten Kühlraum (111) in Verbindung steht; und
einen zweiten Bereich (157), in den das Stromkabel (151) eintritt und aus dem es austritt, der so konfiguriert ist, dass er nicht mit dem ersten Kühlraum (111) in Verbindung steht.

8. Kühlschrank nach Anspruch 7, wobei das Stromkabel ein Aufrollautomat ist, das im zweiten Bereich (157) aufgewickelte und eingebaute Stromkabel (151) als Reaktion auf ein Herausziehen des Stromkabelanschlusses (151a) herausgezogen wird und sich eine dem ersten Kühlraum (111) ausgesetzte Länge ändert.

9. Kühlschrank nach Anspruch 8, wobei das Stromkabel (151) elektrisch mit dem Hauptkörper-Stromversorgungsteil verbunden ist und der Stromkabelanschluss (151a) mit dem unabhängigen Stromversorgungsteil (240) des unabhängigen Kühlschranks (200) verbunden ist, um den Hauptkörper-Stromversorgungsteil und den unabhängigen Stromversorgungsteil (240) elektrisch zu verbinden.

10. Kühlschrank nach einem der Ansprüche 7 bis 9, wobei der Kabelkasten (150) ferner eine Kabelkastentür (155) aufweist, die sich zwischen dem ersten Bereich (156) und dem zweiten Bereich (157) bewegt und den ersten Bereich (156) in Bezug auf den ersten Kühlraum (111) schließt oder öffnet.

11. Kühlschrank nach einem der Ansprüche 1 bis 10, wobei das Aufbewahrungsfach (260) eine Schwenkstange (263) aufweist, die in einer Breitenrichtung des Aufbewahrungsfachs (260) angeordnet ist und sich um eine virtuelle Achse parallel zur Breitenrichtung des Aufbewahrungsfachs (260) dreht.

12. Kühlschrank nach Anspruch 11, wobei die Schwenkstange (263) einen Getränkehalter mit halbkreisförmigen, sich wiederholenden Nuten aufweist.

13. Kühlschrank nach Anspruch 11 oder 12, wobei die Schwenkstange (263) in einem vorbestimmten Abstand von der Schiebetür (261) installiert ist.

## Revendications

1. Réfrigérateur, comprenant :
un corps principal (110) comprenant un premier espace de réfrigération (111) ;
une porte (120) fermant sélectivement le premier espace de réfrigération (111) du corps principal (110) ;
un premier module de pompe à chaleur intégré au corps principal (110) et prévu pour refroidir le premier espace de réfrigération (111) ;
un réfrigérateur indépendant (200) disposé de manière amovible dans le premier espace de réfrigération (111) clos par la porte (120) et formant un espace isolant indépendant du premier espace de réfrigération (111) ;
un deuxième module de pompe à chaleur (230) intégré au réfrigérateur indépendant (200) pour refroidir un deuxième espace de réfrigération du réfrigérateur indépendant (200) ;
une partie d'alimentation électrique du corps principal intégrée au corps principal (110) et fournissant de l'énergie ; et
une partie d'alimentation électrique indépendante (240) intégrée au réfrigérateur indépendant (200),
où le réfrigérateur indépendant (200) comprend :
une carrosserie extérieure (210) donnant sa forme externe au réfrigérateur indépendant (200) ;
une carrosserie intérieure (220) formant le deuxième espace de réfrigération du réfrigérateur indépendant (200) ; et
un compartiment de stockage (260) rentrant dans la carrosserie intérieure (220) et extractible de celle-ci, et
où le deuxième module de pompe à chaleur (230) est disposé dans un espace entre la carrosserie extérieure (210) et la carrosserie intérieure (220),
**caractérisé en ce que**
le réfrigérateur indépendant (200) comprend en outre une porte coulissante (261) disposée sur une surface du compartiment de stockage (260) et fermant le deuxième espace de réfrigération avec la carrosserie intérieure (220),
où la porte coulissante (261) comprend un panneau de commande (262) prévu pour commander le réfrigérateur indépendant (200) et afficher des informations du réfrigérateur indépendant (200).

2. Réfrigérateur selon la revendication 1, où le deuxième module de pompe à chaleur (230) est un élément thermoélectrique.

3. Réfrigérateur selon la revendication 1 ou la revendication 2, où la partie d'alimentation électrique indépendante (240) est une batterie.

4. Réfrigérateur selon la revendication 1, la revendication 2 ou la revendication 3, où la partie d'alimentation électrique indépendante (240) est connectée électriquement à la partie d'alimentation électrique du corps principal pour recevoir de l'énergie.

5. Réfrigérateur selon la revendication 4, où la partie d'alimentation électrique indépendante (240) est connectée électriquement à la partie d'alimentation électrique du corps principal par un câble d'alimentation (151) disposé sur un côté du premier espace de réfrigération (111) du corps principal (110).

6. Réfrigérateur selon la revendication 5, où le câble d'alimentation (151) est intégré à une boîte à câble (150) disposée dans le corps principal (110) mais pas de manière à occuper le premier espace de réfrigération (111), et où, en réaction à l'ouverture et à la fermeture d'une surface de la boîte à câble (150) vers le premier espace de réfrigération (111), la boîte à câble (150) communique avec le premier espace de réfrigération (111).

7. Réfrigérateur selon la revendication 6, où la boîte à câbles (150) comprend :
une première zone (156) dans laquelle pénètre et dont ressort une borne de câble d'alimentation (151a), prévue pour communiquer directement avec le premier espace de réfrigération (111) en réaction à l'ouverture et à la fermeture de la surface de la boîte à câble (150) ; et
une deuxième zone (157) dans laquelle pénètre et dont ressort le câble d'alimentation (151), prévue de manière à ne pas communiquer avec le premier espace de réfrigération (111).

8. Réfrigérateur selon la revendication 7, où le câble d'alimentation est un type à enrouleur automatique, où le câble d'alimentation (151) enroulé et intégré à la deuxième zone (157) est extrait en réaction à un retrait de la borne de câble d'alimentation (151a), et où varie une longueur exposée au premier espace de réfrigération (111).

9. Réfrigérateur selon la revendication 8, où le câble d'alimentation (151) est connecté électriquement à la partie d'alimentation électrique du corps principal, et la borne de câble d'alimentation (151a) est connectée à la partie d'alimentation électrique indépendante (240) du réfrigérateur indépendant (200) de manière à connecter électriquement la partie d'alimentation électrique du corps principal et la partie d'alimentation électrique indépendante (240).

10. Réfrigérateur selon l'une des revendications 7 à 9, où la boîte à câble (150) comprend en outre une porte de boîte à câble (155) mobile entre la première zone (156) et la deuxième zone (157) et fermant ou ouvrant la première zone (156) par rapport au premier espace de réfrigération (111).

11. Réfrigérateur selon l'une des revendications 1 à 10, où le compartiment de stockage (260) comprend une barre oscillante (263) disposée dans le sens de la largeur du compartiment de stockage (260) et tournant autour d'un axe virtuel parallèle au sens de la largeur du compartiment de stockage (260).

12. Réfrigérateur selon la revendication 11, où la barre oscillante (263) comprend un porte-boisson avec des rainures répétées semi-circulaires.

13. Réfrigérateur selon la revendication 11 ou la revendication 12, où la barre oscillante (263) est installée à une distance prédéterminée de la porte coulissante (261).
